# EUROPEAN PATENT SPECIFICATION

(11) **EP 1 305 481 B1**
(45) Date of publication and mention of the grant of the patent: **02.05.2012**
(21) Application number: 01950102.2
(22) Date of filing: 04.07.2001
(51) Int. Cl.: E04B 1/61, E04H 1/12, E04B 1/343, B65D 6/24

(54) **Assembly of plates**
Paneelenanordnung
Arrangement de plaques

(30) Priority: 04.07.2000 NL 1015605; 21.06.2001 NL 1018352
(43) Date of publication of application: 02.05.2003
(73) Proprietor: Fawic B.V., 7161 AA Neede (NL)
(72) Inventor: DIJKSTRA, Hielke, NL-7161 EA Neede (NL); NELEN, Frans, Franciscus, NL-5629 JZ Eindhoven (NL)
(74) Representative: Prins, Hendrik Willem
(86) International application number: PCT/NL2001/000503
(87) International publication number: WO 2002/002883

(56) References cited:
- FR-A- 2 761 388
- GB-A- 2 238 808
- US-A- 4 192 113
- US-A- 4 852 317
- US-A- 4 989 386
- US-A- 5 491 943
- US-A- 5 592 794
- US-A- 5 601 266

## Description

The present invention relates to an assembly of plates.

An assembly of plates according to the invention can consist of a wall constructed from plates, a housing such as a WC-cabin, a stand which is constructed from plates usually connected at an angle, and an open or closed container.

In the case of a wall, a stand or a container for multiple use, it is important that this can be constructed from a set of plates. This set of plates must herein be secured as well as possible against mutual translation of plates.

An assembly of plates similar to the preamble of claims 1 and 2 is known from US-A-5 491943.

The present invention has for its object to provide an assembly of plates which can be applied as container, stand, wall and optionally cabin which comprises the above stated advantages.

According to a first aspect of the invention, this object is achieved with an assembly of plates as defined in claim 1. According to a second aspect of the invention, this object is also achieved with an assembly of plates as defined in claim 2.

By making use of plates which are provided on plate edges with longitudinal structures securing against transversal displacement, so that a form-fitting coupling is realized which is secured with lock means, two plates in each case are pulled rigidly onto each other, whereby displacements transversely of the form-fitting coupling become impossible. The profiles are provided for this purpose with structures which can bring about a form-fitting coupling. A form-fitting coupling implies that after coupling there are in fact substantially no free spaces present any longer between the profiles and a good mutual transfer of forces is guaranteed. A transversal coupling is avoided here in that these structures are provided with co-acting complementary recesses and edges engaging therein. The profiles can be manufactured by performing folding or rolling operations on metal strips. The profiles can also be manufactured by extrusion or by a milling operation. The profiles can therefore consist of wood, metal, plastic and combinations thereof.

The plates can consist of wood, metal, plastic and the like, but may also consist of a laminate. Use can be made herein of a core of a honeycomb, for instance of cardboard, plastic such as polyester or of pressed wood fibre having arranged thereon on both sides a cover layer of for instance a plastic such as PUR.

It will be apparent that the plates can be mutually coupled or uncoupled quickly by operating the lock means.

According to the second aspect of the invention, the profiles are coupled via a coupling profile. This means that the profiles arranged on the plates can be of the same type and the coupling profile is provided with a counter-structure form whereby the same form-fitting coupling is still realized. If in further preference a coupling angle between the coupled walls varies from 10° to 180°, an angled set of plates can be formed. This finds particular application in the case of the coupling profiles, wherein the coupling angles can be varied with standard plates, since the variable coupling angle is arranged in the coupling profile. A plurality of walls can also be coupled.

In such embodiments a set of plates can also be realized wherein the longitudinal, transversally securing structures lie in the line of the plate. It is thus possible to construct a larger wall of plates coupled according to the invention lying mutually in line. An angle between these plates can also be realized if the longitudinal, transversally securing structures preferably lie at an angle to the plate.

If in further preference the profile encloses the plate edge with its profiled edges, an embodiment is obtained wherein in fact no protruding parts occur and the edge of the profile is moreover strengthened and crumbling of plate edges is avoided.

If it is further preferred that the edge of the plates is strengthened, it is recommended that:
the plate edge is provided with an insert profile and the lock means are preferably received in the insert profile.

If it is required that the assembly of plates has an improved watertightness, wind-proofing or sound-proofing, it is recommended that:
a profile and/or coupling profile is provided with sealing means.

For the erection of an assembly of plates according to the first aspect of the invention it is possible to operate the lock means via a plate surface. According to the second aspect of the invention , it is possible to operate the lock means via a coupling profile.

According to the invention, the lock means engage in an opening formed in a profile. According to the first aspect of the invention profile is the plate profile. The arranging of this opening in such a profile results in a lock means unit which is simple to design, while substantially no structural changes have to be made in the plates.

According to the invention, the opening is a wire-reinforced opening. A wire is herein fixed or formed around the opening.

The wire-reinforced opening is arranged in a profile nose.

The positioning and placing of the lock means can take place more easily and more certainly if in further preference the lock means can be received in a profile guide. Nor in this case do any, or hardly any, changes have to be made to the plates.

A particular advantage results if in further preference the lock means are slidable in a carriage along the profile guide until the carriage is secured.

The lock means can comprise a wedge and/or a catch which can be operated by a handle.

In order to avoid the lock means ceasing to function in undesired manner, it is further recommended that the lock means can be secured with a securing element, for instance the handle with which a catch of the lock means can be operated.

Mentioned and other features of the invention will be elucidated hereinbelow on the basis of a number of embodiments, which are given only by way of example and without the invention being deemed limited thereto. Reference is made herein to the annexed drawings, in which:
figure 1 shows a perspective, partly broken-away and partly exploded view of a set of plates as a container according to the invention;
figure 2 shows on larger scale a partly broken-away view as according to detail II of Figure 1;
figure 3 shows a cross-section along the angled line III-III of figure 2;
figures 4-7 each show variants in cross-section of the embodiment shown in figure 3; and
figures 8-10 and figures 11 and 12 show views of two other variants of a part of a set of plates according to the invention.

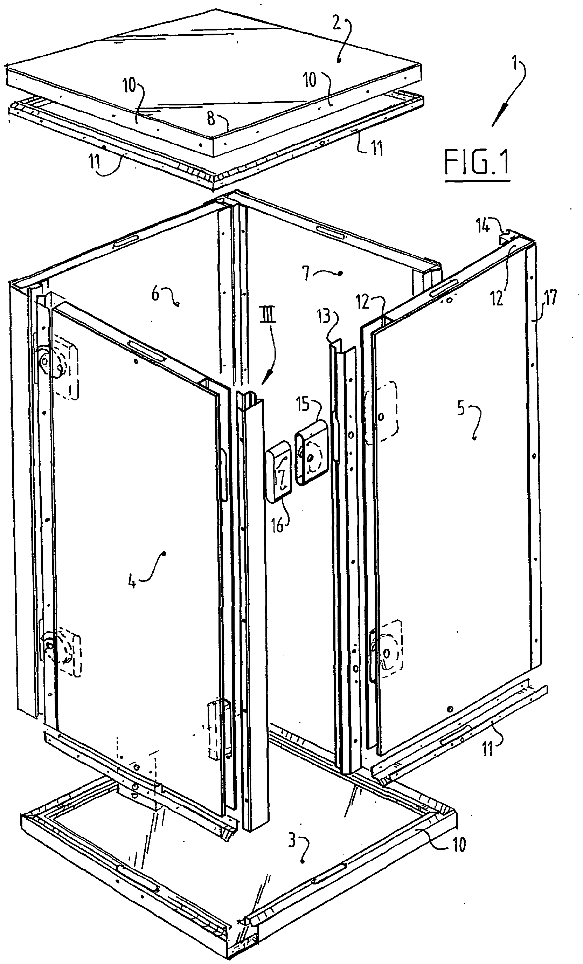

Figures 1-3 show an assembly of plates 1 or container 1 according to the invention. This container 1 comprises a cover plate 2, a bottom plate 3 and four wall plates 4-7. Cover plate 2 and bottom plate 3 are provided on the plate edges 8, 9 with profiles 10. Wall plates 4-7 are provided with complementary profiles 11 and on the longitudinal plate edges 12 with profiles 13 and 14.

Plates 2-7 are further provided with lock means. Profiles 2-7 and lock means 15, 16 are fixed to the corresponding plate using fastening means such as pop rivets or blind rivets 17.

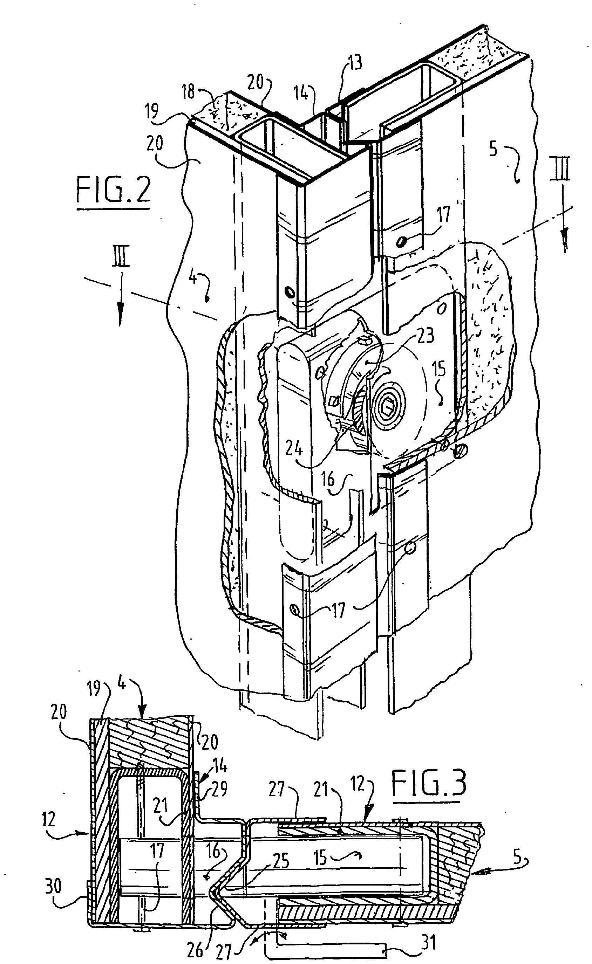

Figure 2 shows in more detail the coupling of plate 4 to plate 5.

Plates 4, 5 consist of a polyurethane core 18 which is provided on one side with a wood layer 19 and on both sides with a polyester top layer 20. On the longitudinal plate edges 12 the core 18 is partially removed, for instance by milling, and a steel insert profile 21 is arranged in the formed recess for the purpose of strengthening the longitudinal plate edge 12.

Lock means 15, 16 can be operated with a key 22, whereby an eccentric 23 engages in known manner behind an edge 24, whereby plates 4, 5 are pulled tightly onto each other and locked against a lateral as well as transversal displacement.

To this end the profile 13 is provided with a longitudinal edge 25 which is received in form-fitting manner in a recess 26 in profile 14. In addition to a good support of the profiles 13, 14 pulled tightly onto each other, a displacement transversely of profiles 13, 14 is also prevented by longitudinal edge 25 and recess 26. It can clearly be seen that profile 13 with its profile edges 27, 28 and profile 14 with its edges 29, 30 enclose the longitudinal edges 12 of both plates 4, 5. This produces a good, smooth and safe finish and also, using the insert profiles, a tubular strengthening.

It will further be apparent that by placing the recess 26 obliquely relative to plate 4, the plates 4 and 5 can be coupled at an oblique angle, i.e. an acute or obtuse angle.

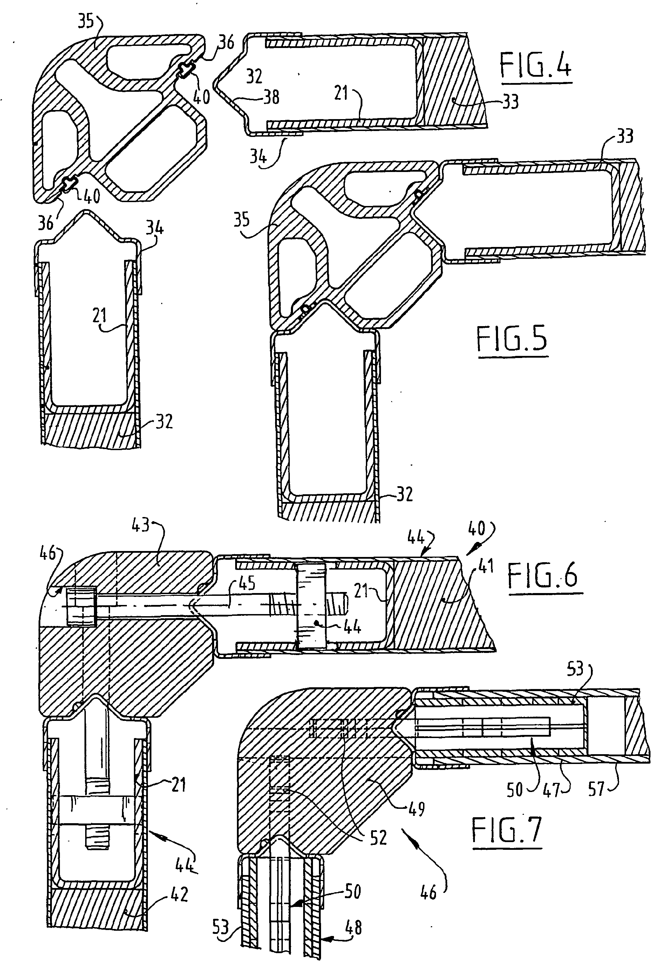

Figures 4 and 5 show an assembly of plates 31 according to the invention which can for instance be used for a stand. Tun this case the plates 32 and 33 are each provided with the same type of profile 34 which is fastened in the same manner as profile 13 to the respective plates 32 and 33. Plates 32 and 33 are coupled via a coupling profile 35 which is provided with a structure 36 complementary to structure 37 of profile 34 which is provided with a protruding edge 38. The structure 36, which is provided with groove 39 for edge 38, is also provided with a rubber sealing strip 40. A watertight, soundproof or wind-proof coupling can hereby be realized. In figure 5 the plates 32, 33 are coupled to profile 35 using lock means (not shown).

It will further be apparent that with a displacement of the structures 36 in the coupling profile the right angle shown in figure 5 can vary between an acute angle and an obtuse angle as well as forming an in-line coupling of plates 32, 33.

Figure 6 shows an assembly of plates 40 according to the invention consisting of the plates 41 and 42 and the solid coupling profile 43. In this case the lock means 44 are shown. The lock means comprise a nut 44 mounted in insert profile 21 and a bolt 45 which is screwed therein and which can be operated via a recess 46 in coupling profile 43.

Finally, figure 7 shows an assembly of plates 46, which can for instance be used for a cabin wall. The set of plates 46 comprises two plates 47 and 48 and coupling profile 49. Lock means 50 can be operated from a plate surface 51 and hook behind an edge 52 incorporated in coupling profile 49. It is noted that no use is made of insert profile 21 in the set of plates 46. The reinforcement is produced in this case at the position of the lock means by housing 53 of lock means 50.

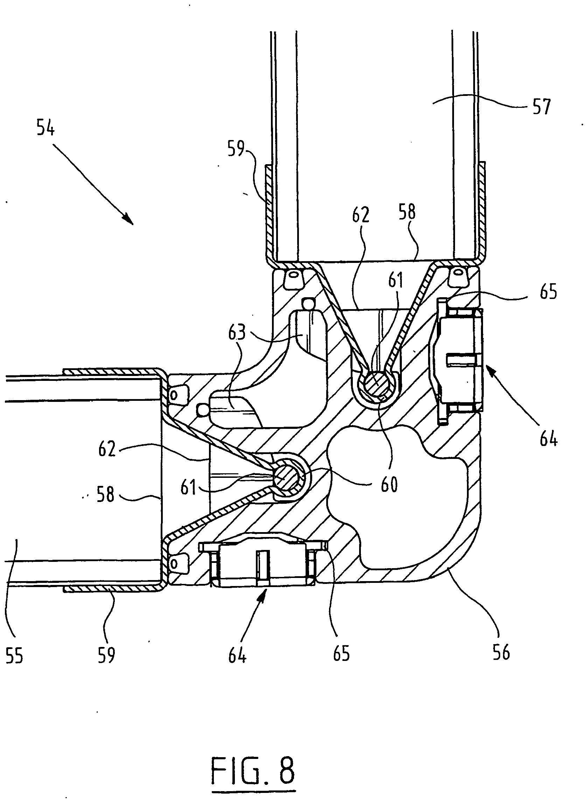

Figure 8 shows in cross-section another assembly of plates 54 according to the invention, wherein a plate 55 is coupled via a coupling profile 56 to a plate 57. Plate 55 and plate 57 are each provided on a plate edge 58 with a plate profile 59. The plate profile has a roundly-formed profile nose 60 which is strengthened with a steel wire 61.

In the nose of profile 59 is formed an opening 62 in which a wedge-shaped catch 63 of lock means 64 engages on wire 61. Owing to the wedge shave of catch 63 the plates 55 and 57 are pulled tightly onto corner profile 56. Wire 61 not only acts here as strengthening but also for a resilient bias in this coupling. Finally shown is that lock means 64 are guided slidably in a guide 65 arranged in longitudinal direction in corner profile 56.

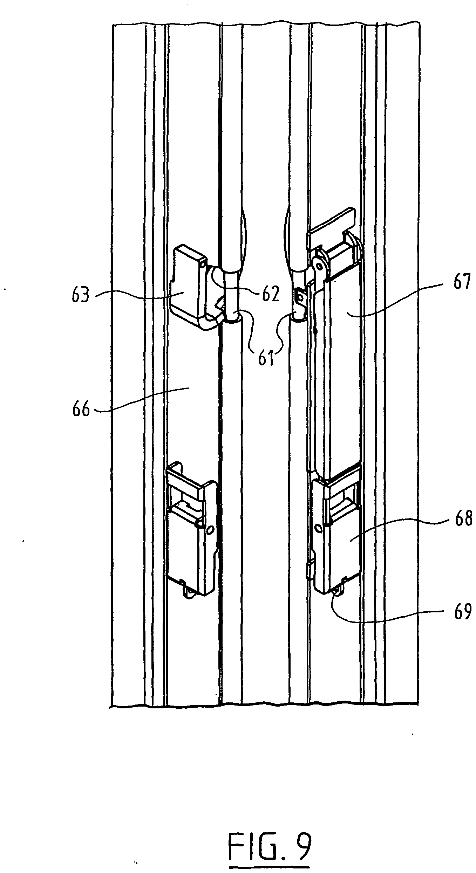

Figure 9 shows various aspects in side view. Lock means 64 comprise a lock carriage 66 which is guided in guide 65 and is provided with a catch 63 mounted rotatably thereon and operable with a handle 67. Handle 67 is provided with a bent edge 68 which can grip behind a securing element 73 which is guided on carriage 66 and which is provided with an eye 69 in which securing means (not shown), for instance a lock, can be mounted, whereby translation of securing element 73 is blocked. Using lips 69 for bending outward, the lock carriage 66 can be fixed in the guide.

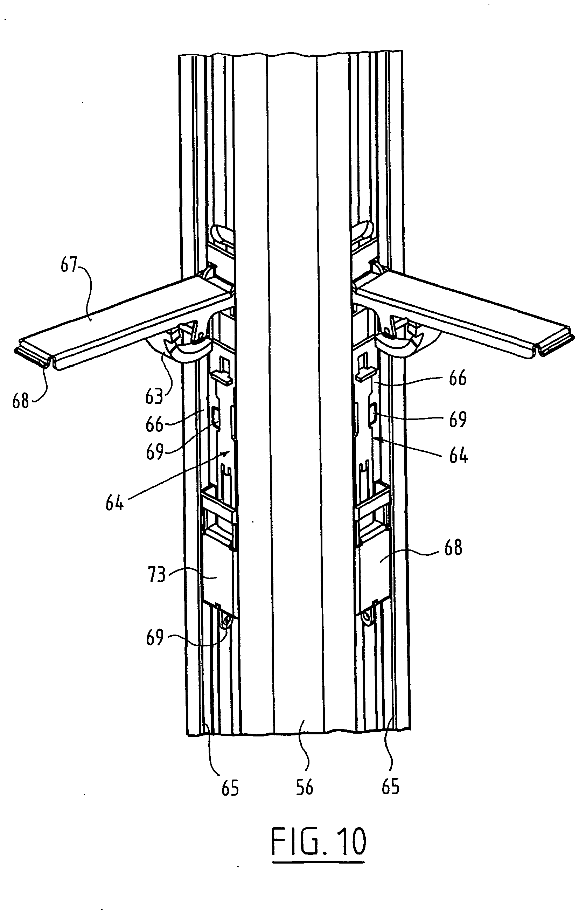

Figure 10 shows in more cut-away state the lock means 64 in the closed position.

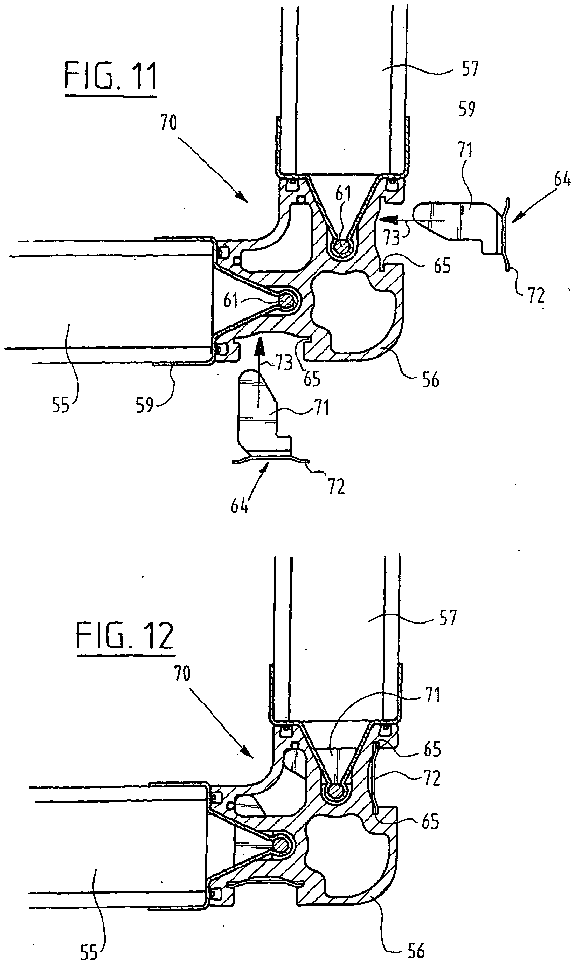

Figures 11 and 12 show another plate system 70 according to the invention. Compared to the plate system 54 of figures 8-10, lock means 64 here comprise a wedge 71 provided with a resilient guide plate 72. Wedge 71. engages in the wire-strengthened opening 62 through displacement in the direction of arrow 73. The situation of figure 12 is hereby reached in which the guide plate 72 of wedge 71 has snapped into guide 65. A coupling which is once again ensured is hereby realized between plates 55 and 57 via corner profile 56.

## Claims

1. Assembly (1) of plates (2, 3, 4-7), such as a wall, a stand, a housing or a container, comprising:
a first (4) and second plate (5) which are each provided with a profile (14, 13) on an edge (12) of the plate for coupling the two plates (4, 5) to each other, which profile (14, 13) of the first (4) and second plate (5) is provided with a longitudinal structure in the form of a recess (26) and an edge (25), respectively, said recess (26) and edge (25) being complementary and configured to co-act for securing the coupled plates (4, 5) against a transversal displacement for forming a form-fitting coupling between the two plates (4, 5); and
lock means for locking and/or biasing the coupling, which lock means are configured to engage in aligned openings formed in the coupled profiles (14, 13) of the first (4) and second plate (5);
**characterized in that** the profile (13) of the second plate (5) is provided with a profile nose, wherein the opening formed in the profile of the second plate (5) is arranged in the profile nose, said opening being reinforced by a longitudinal wire fixed or formed around the opening, and **in that** the lock means can be operated via a plate surface.

2. Assembly (31; 40; 46; 54) of plates (32, 33; 41, 42; 47, 48; 55, 57), such as a wall, a stand, a housing or a container, comprising:
a first (32; 41; 47; 55) and second plate (33; 42; 48; 57) each provided with a profile (34; 59) on an edge of the plate for coupling the two plates (32, 33; 41, 42; 47, 48; 55, 57) to each other, wherein each profile (34; 59) is provided with a longitudinal structure in the form of an edge (38, 60);
a coupling profile (35, 56) for coupling the plates (32, 33; 55, 57) to each other, said coupling profile (35, 56) comprising a pair of longitudinal structures in the form of recesses, configured to co-act with the edges of the profiles (34; 59) of the first (32; 55) and second plate (33; 57) for securing the coupled plates (32, 33) against a transversal displacement and for forming a form-fitting coupling between the two plates (32, 33) via the coupling profile (35); and
lock means (64) for locking and/or biasing the coupling, which lock means (64) are configured to engage in aligned openings (62) formed in the profile of the first plate (55) and the coupling profile (56) and in aligned openings (62) formed in the profile of the second plate (57) and the coupling profile (56);
**characterized in that** the profiles of the first (55) and second plate (57) are each provided with a profile nose (60), wherein the openings (62) formed in the profiles (59) of the first (55) and second plates (57) are arranged in the respective profile nose (60), said openings (62) being each reinforced by a longitudinal wire (61) fixed or formed around the opening (62), and **in that** the lock means (64) can be operated via the coupling profile.

3. Assembly of plates as claimed in claim 1 or 2,
wherein a coupling angle between the coupled walls varies from 10° to 180°.

4. Assembly of plates as claimed in any one of the claims 1-3, wherein the longitudinal, transversally securing structures lie in the line of the plate.

5. Assembly of plates as claimed in any one of the claims 1-3, wherein the longitudinal, transversally securing structures lie at an angle to the plate.

6. Assembly of plates as claimed in any one of the claims 1-5, wherein the profile encloses the plate edge with its profiled edges.

7. Assembly of plates as claimed in any one of the claims 1-6, wherein the plate edge is provided with an insert profile (21) and the lock means are received in the insert profile.

8. Assembly of plates as claimed in any one of the claims 1-7, wherein a profile and/or the coupling profile is provided with sealing means (40).

9. Assembly of plates as claimed in any one of the claims 1-8, wherein the lock means (64) can be received in a profile guide (65).

10. Assembly of plates as claimed in claim 9, wherein the lock means (64) are slidable in a carriage (66) along the profile guide (65).

11. Assembly of plates as claimed in any one of the claims 1-10, wherein the lock means (64) comprise a wedge (71) and/or a catch (63) which can be operated with a handle (67).

12. Assembly of plates as claimed in claim 11, wherein the handle can be secured with a securing element.

13. Assembly of plates as claimed in any one of the claims 1-12, wherein the lock means are provided with securing means.

## Patentansprüche

1. Anordnung (1) von Platten (2, 3, 4 - 7) wie beispielsweise eine Wand, ein Gestell oder Stand, ein Gehäuse oder ein Behälter, aufweisend:
eine erste (4) und zweite Platte (5), die jeweils ein Profil (14, 13) auf einem Rand (12) der Platte zum Zusammenkuppeln der zwei Platten (4, 5) aufweisen, welche Profile (14, 13) der ersten (4) und zweiten Platte (5) mit einer Längsstruktur in der Form einer Vertiefung (26) bzw. eines Rands (25) bereitgestellt sind, wobei die Vertiefung (26) und der Rand (25) komplementär und konfiguriert sind zum Zusammenwirken zum Befestigen der gekuppelten Platten (4, 5) gegen eine transversale Verschiebung zur Bildung einer formschlüssigen Kupplung zwischen den zwei Platten (4, 5), und eine Verriegelungseinrichtung zum Verriegeln und/oder Vorspannen der Kupplung, welche Verriegelungseinrichtung konfiguriert ist zum Eingreifen in ausgerichtete Öffnungen, die in den gekuppelten Profilen (14, 13) der ersten (4) und zweiten Platte (5) ausgebildet sind,
**dadurch gekennzeichnet, dass** das Profil (13) der zweiten Platte (5) mit einer Profilnase bereitgestellt ist, wobei die im Profil der zweiten Platte (5) ausgebildete Öffnung in der Profilnase angeordnet ist, wobei die Öffnung durch einen um die Öffnung herum fixierten oder ausgebildeten Längsdraht verstärkt ist, und dass die Verriegelungseinrichtung über eine Plattenfläche betätigt werden kann.

2. Anordnung (31; 40; 46; 54) von Platten (32, 33; 41, 42; 47, 48; 55, 57) wie beispielsweise eine Wand, ein Gestell oder Stand, ein Gehäuse oder ein Behälter, aufweisend:
eine erste (32; 41; 47; 55) und zweite Platte (33; 42; 48; 57) deren jede an einem Rand der Platte mit einem Profil (34; 59) zum Zusammenkuppeln der zwei Platten (32, 33; 41, 42; 47, 48; 55, 57) bereitgestellt ist, wobei jedes Profil (34; 59) mit einer Längsstruktur in der Form eines Rands (38, 60) bereitgestellt ist,
ein Kupplungsprofil (35, 56) zum Zusammenkuppeln der Platten (32, 33; 55, 57), wobei das Kupplungsprofil (35, 56) ein Paar Längsstrukturen in der Form von Vertiefungen aufweist, die konfiguriert sind zum Zusammenwirken mit den Rändern der Profile (34; 59) der ersten (32; 55) und zweiten Platte (33; 57) zum Befestigen der gekuppelten Platten (32, 33) gegen eine transversale Verschiebung und zum Bilden einer formschlüssigen Kupplung zwischen den zwei Platten (32, 33) über das Kupplungsprofil (35), und
eine Verriegelungseinrichtung (64) zum Verriegeln und/oder Vorspannen der Kupplung, welche Verriegelungseinrichtung (64) konfiguriert ist zum Eingreifen in ausgerichtete Öffnungen (62), die in dem Profil der ersten Platte (55) und dem Kupplungsprofil (56) ausgebildet sind, und in ausgerichtete Öffnungen (52), die in dem Profil der zweiten Platte (57) und dem Kupplungsprofil (56) ausgebildet sind,
**dadurch gekennzeichnet, dass** die Profile der ersten (55) und zweiten Platte (57) jeweils mit einer Profilnase (60) bereitgestellt sind, wobei die in den Profilen (59) der ersten (55) und zweiten Platte (57) ausgebildeten Öffnungen (62) in der jeweiligen Profilnase (60) angeordnet sind, wobei die Öffnungen (62) jeweils durch einen Längsdraht (61), der um die Öffnung (62) herum befestigt oder ausgebildet ist, verstärkt sind, und dass die Verriegelungseinrichtung (64) über das Kupplungsprofil betätigt werden kann.

3. Anordnung von Platten nach Anspruch 1 oder 2, wobei ein Kupplungswinkel zwischen den gekuppelten Wänden von 10° bis 180° variiert.

4. Anordnung von Platten nach einem der Ansprüche 1 bis 3, wobei die Längs-, Transversal-Befestigungsstrukturen in der Linie der Platte liegen.

5. Anordnung von Platten nach einem der Ansprüche 1 bis 3, wobei die Längs-, Transversal-Befestigungsstrukturen in einem Winkel zur Platte liegen.

6. Anordnung von Platten nach einem der Ansprüche 1 bis 5, wobei das Profil den Plattenrand mit seinen Profilrändern einschließt.

7. Anordnung von Platten nach einem der Ansprüche 1 bis 6, wobei der Plattenrand mit einem Einsetzprofil (21) bereitgestellt ist und die Verriegelungseinrichtung in dem Einsetzprofil aufgenommen ist.

8. Anordnung von Platten nach einem der Ansprüche 1 bis 7, wobei ein Profil und/oder das Kupplungsprofil mit einer Dichtungseinrichtung (40) bereitgestellt ist.

9. Anordnung von Platten nach einem der Ansprüche 1 bis 9, wobei die Verriegelungseinrichtung (64) in einer Profilführung (65) aufgenommen sein kann.

10. Anordnung von Platten nach Anspruch 9, wobei die Verriegelungseinrichtung (64) in einem Schlitten (66) entlang der Profilführung (65) verschiebbar ist.

11. Anordnung von Platten nach einem der Ansprüche 1 bis 10, wobei die Verriegelungseinrichtung (64) ein keilförmiges Stück (71) und/oder eine Arretierung (63) aufweist, das bzw. die mit einer Handhabe (67) betätigt werden kann.

12. Anordnung von Platten nach Anspruch 11, wobei die Handhabe mit einem Befestigungselement befestigt sein kann.

13. Anordnung von Platten nach einem der Ansprüche 1 bis 12, wobei die Verriegelungseinrichtung mit einer Befestigungs- bzw. Sicherungseinrichtung bereitgestellt ist.

## Revendications

1. Ensemble (1) de plaques (2, 3, 4-7), comme une paroi, un support, un boîtier ou un conteneur, comprenant :
une première (4) et une deuxième plaque (5) qui sont chacune prévues avec un profil (14, 13) sur un bord (12) de la plaque pour coupler les deux plaques (4, 5) entre elles, lequel profil (14, 13) de la première (4) et de la deuxième plaque (5) est prévu avec une structure longitudinale se présentant respectivement sous la forme d'un évidement (26) et d'un bord (25), ledit évidement (26) et le bord (25) étant complémentaires et configurés pour agir ensemble afin de fixer les plaques (4, 5) couplées contre un déplacement transversal afin de former un couplage mécanique entre les deux plaques (4, 5) ; et
des moyens de blocage pour bloquer et/ou solliciter le couplage, lesquels moyens de blocage sont configurés pour se mettre en prise dans les ouvertures alignées formées dans les profils (14, 13) couplés de la première (4) et de la deuxième plaque (5) ;
**caractérisé en ce que** le profil (13) de la deuxième plaque (5) est prévu avec un nez de profil, dans lequel l'ouverture formée dans le profil de la deuxième plaque (5) est agencée dans le nez de profil, ladite ouverture étant renforcée par un fil longitudinal fixé ou formé autour de l'ouverture et **en ce que** les moyens de blocage peuvent être actionnés via une surface de plaque.

2. Ensemble (31 ; 40 ; 46 ; 54) de plaques (32, 33 ; 41, 42 ; 47, 48 ; 55, 57), comme une paroi, un support, un boîtier ou un conteneur, comprenant :
une première (32 ; 41 ; 47 ; 55) et une deuxième plaque (33 ; 42 ; 48 ; 57) chacune prévue avec un profil (34 ; 59) sur un bord de la plaque pour coupler les deux plaques (32, 33 ; 41, 42 ; 47, 48 ; 55, 57) entre elles, dans lequel chaque profil (34 ; 59) est prévu avec une structure longitudinale de présentant sous la forme d'un bord (38, 60) ;
un profil de couplage (35, 56) pour coupler les plaques (32, 33 ; 55, 57) entre elles, ledit profil de couplage (35, 56) comprenant une paire de structures longitudinales se présentant sous la forme d'évidements, configurées pour co-agir avec les bords des profils (34 ; 59) de la première (32 ; 55) et de la deuxième plaque (33 ; 57) afin de fixer les plaques couplées (32, 33) contre un déplacement transversal et pour former un couplage mécanique entre les deux plaques (32, 33) via le profil de couplage (35) ; et
des moyens de blocage (64) pour bloquer et/ou solliciter le couplage, lesquels moyens de blocage (64) sont configurés pour se mettre en prise dans des ouvertures alignées (62) formées dans le profil de la première plaque (55) et le profil de couplage (56) et dans des ouvertures alignées (62) formées dans le profil de la deuxième plaque (57) et le profil de couplage (56) ;
**caractérisé en ce que** les profils de la première (55) et de la deuxième plaque (57) sont chacun prévus avec un nez de profil (60), dans lequel les ouvertures (62) formées dans les profils (59) des première (55) et deuxième plaques (57) sont agencées dans le nez de profil (60) respectif, lesdites ouvertures (62) étant chacune renforcées par un fil longitudinal (61) fixé ou formé autour de l'ouverture (62), et **en ce que** les moyens de blocage (64) peuvent être actionnés via le profil de couplage.

3. Ensemble de plaques selon la revendication 1 ou 2, dans lequel un angle de couplage entre les parois couplées varie de 10° à 180°.

4. Ensemble de plaques selon l'une quelconque des revendications 1 à 3, dans lequel les structures longitudinales de fixation transversale sont alignées par rapport à la plaque.

5. Ensemble de plaques selon l'une quelconque des revendications 1 à 3, dans lequel les structures longitudinales de fixation transversale sont disposées selon un angle par rapport à la plaque.

6. Ensemble de plaques selon l'une quelconque des revendications 1 à 5, dans lequel le profil comprend le bord de plaque avec ses bords profilés.

7. Ensemble de plaques selon l'une quelconque des revendications 1 à 6, dans lequel le bord de plaque est prévu avec un profil d'insert (21) et les moyens de blocage sont reçus dans le profil d'insert.

8. Ensemble de plaques selon l'une quelconque des revendications 1 à 7, dans lequel un profil et/ou le profil de couplage est prévu avec des moyens d'étanchéité (40).

9. Ensemble de plaques selon l'une quelconque des revendications 1 à 8, dans lequel les moyens de blocage (64) peuvent être reçus dans un guide de profil (65).

10. Ensemble de plaques selon la revendication 9, dans lequel les moyens de blocage (64) peuvent coulisser dans un chariot (66) le long du guide de profil (65).

11. Ensemble de plaques selon l'une quelconque des revendications 1 à 10, dans lequel les moyens de blocage (64) comprennent une cale (71) et/ou une prise (63) qui peuvent être actionnées avec une poignée (67).

12. Ensemble de plaques selon la revendication 11, dans lequel la poignée peut être fixée avec un élément de fixation.

13. Ensemble de plaques selon l'une quelconque des revendications 1 à 12, dans lequel les moyens de blocage sont prévus avec des moyens de fixation.
